# EUROPEAN PATENT APPLICATION

(11) **EP 4 475 578 A1**
(43) Date of publication of application: **11.12.2024**
(21) Application number: 23778006.9
(22) Date of filing: 23.03.2023
(51) Int. Cl.: H04W 12/0431

(54) **SECURE DISTANCE MEASUREMENT METHOD AND COMMUNICATION APPARATUS**

(30) Priority: 01.04.2022 CN 202210339726; 26.08.2022 CN 202211037479
(71) Applicant: Huawei Technologies Co., Ltd., Shenzhen, Guangdong 518129 (CN)
(72) Inventor: WANG, Kang, Shenzhen, Guangdong 518129 (CN); ZHANG, Huisha, Shenzhen, Guangdong 518129 (CN); YU, Qian, Shenzhen, Guangdong 518129 (CN); HU, Shichang, Shenzhen, Guangdong 518129 (CN)
(74) Representative: Maiwald GmbH
(86) International application number: PCT/CN2023/083434
(87) International publication number: WO 2023/185637

(57) **Abstract**

This application provides a secure ranging method and an apparatus. The method includes: A receiving-end device and a transmitting-end device obtain a session key through a narrowband system. The devices of both parties further generate secure CTSs in a symmetric manner based on the session key in combination with CTS configuration information, and perform inter-device ranging in a UWB system by using the CTSs. According to this method, the CTS can be flexibly configured based on the CTS configuration information, to improve secure ranging performance. In addition, in this method, the narrowband system replaces the UWB system to perform key-related information negotiation, and ranging is performed in the UWB system, so that high-accuracy ranging is implemented while low power consumption is considered.

## Description

This application claims priorities to Chinese Patent Application No. 202210339726.2, filed with the China National Intellectual Property Administration on April 1, 2022 and entitled "METHOD FOR SECURE RANGING INTEGRATING BROADBAND AND NARROWBAND AND COMMUNICATION APPARATUS", and to Chinese Patent Application No. 202211037479.7, filed with the China National Intellectual Property Administration on August 26, 2022 and entitled "SECURE RANGING METHOD AND COMMUNICATION APPARATUS", both of which are incorporated herein by reference in their entireties.

### TECHNICAL FIELD

This application relates to the wireless communication field, and more specifically, to a secure ranging method and a communication apparatus.

### BACKGROUND

An ultra-wideband (ultra-wideband, UWB) technology is a wireless carrier communication technology. Data is transmitted by using a nanosecond-level non-sinusoidal narrow impulse. The ultra-wideband technology occupies an extremely large bandwidth, has features such as a high transmission rate and a large system capacity, and can coexist with an existing communication system. Based on these features, UWB may implement higher ranging and positioning accuracy than an existing wireless positioning technology, and the positioning accuracy is up to a centimeter level. In addition, the UWB has high temporal resolution, so that the UWB has a good anti-multipath capability. The UWB may still implement ranging and positioning in a complex multipath environment, and has become a research hotspot currently.

As a UWB standard is continuously updated, a scrambled timestamp sequence (scrambled timestamp sequence, STS) is added in a ranging process in a new standard, to enhance ranging security. However, the STS needs to be generated after a sending device and a receiving device perform plaintext negotiation through a UWB system. Consequently, a negotiation process occupies a large quantity of broadband system resources, power consumption is high, and a maximum of four STS segments (STS segments) can be configured for the STS. This brings a specific security risk.

### SUMMARY

This application provides a secure ranging method, so that secure ranging performance can be improved, and low-power-consumption and high-accuracy ranging is implemented.

According to a first aspect, a secure ranging method is provided. The method may be performed by a first terminal device, or may be performed by a component (for example, a chip or a circuit) of the first terminal device. This is not limited. For ease of description, an example in which the method is performed by the first terminal device is used below for description.

The method may include: The first terminal device obtains a session key by negotiating with a second terminal device in a first communication system. The first terminal device sends first configuration information to the second terminal device in the first communication system, where the first configuration information includes a related parameter for generating a channel impulse response training sequence CTS. The first terminal device generates the CTS based on the first configuration information and the session key. The first terminal device determines a first measurement result in a second communication system based on the CTS. The first measurement result includes distance information between the first terminal device and the second terminal device. A bandwidth used in the second communication system is greater than a bandwidth used in the first communication system.

For example, the first communication system in this application may be a narrowband system such as a Wi-Fi system or a Bluetooth system.

For example, the second communication system in this application may be a UWB system.

Optionally, the first terminal device and the second terminal device are included in a same personal area network, and the personal area network is established through the first communication system.

According to the foregoing technical solution, the first terminal device may obtain the session key by negotiating with the second terminal device through the narrowband system, further generate the secure CTS based on the session key in combination with the first configuration information, and perform inter-device ranging in the UWB system by using the CTS. It can be learned that, according to this method, the CTS can be flexibly configured based on the first configuration information, to improve secure ranging performance. In addition, in this method, the narrowband system replaces the UWB system to perform key-related information negotiation, so as to reduce power consumption, and ranging is performed in the UWB system, so that high-accuracy ranging is implemented.

With reference to the first aspect, in some implementations of the first aspect, that the first terminal device determines the CTS based on the first configuration information and the session key includes: The first terminal device determines the CTS based on the first configuration information, the session key, and an AES algorithm.

With reference to the first aspect, in some implementations of the first aspect, the method further includes: The first terminal device sends the first measurement result to the second terminal device in the first communication system.

In the foregoing technical solution, the first terminal device broadcasts the measurement result to the second terminal device through the first communication system, so that power consumption of the terminal devices that send and receive the measurement result can be reduced.

With reference to the first aspect, in some implementations of the first aspect, the first configuration information includes at least one of the following parameters: a code length of a preamble code used by the CTS, an index of the preamble code used by the CTS, a length of a cyclic prefix CP of the CTS, a quantity of segments included in the CTS, a quantity of preamble code symbols in each segment of the CTS, and a quantity of base symbols in a gap between two adjacent segments in the CTS.

In the foregoing technical solution, the related parameter included in the first configuration information for generating the CTS is defined in detail. Parameters such as a CTS length and the CTS gap can be configured as required based on the first configuration information, to enhance sequence flexibility and improve ranging security performance.

With reference to the first aspect, in some implementations of the first aspect, that the first terminal device determines a first measurement result in a second communication system based on the CTS includes: The first terminal device generates a ranging frame based on the CTS. The first terminal device sends the ranging frame to the second terminal device in the second communication system. The first terminal device receives the ranging frame from the second terminal device in the second communication system. The first terminal device determines the first measurement result based on time of flight of the ranging frame.

In the foregoing technical solution, a specific implementation of determining the first measurement result based on the CTS is provided.

With reference to the first aspect, in some implementations of the first aspect, a length of the session key is 128 bits or 256 bits.

According to a second aspect, a secure ranging method is provided. The method may be performed by a second terminal device, or may be performed by a component (for example, a chip or a circuit) of the second terminal device. This is not limited. For ease of description, an example in which the method is performed by the second terminal device is used below for description.

The method may include: The second terminal device obtains a session key by negotiating with a first terminal device in a first communication system. The second terminal device receives first configuration information from the first terminal device in the first communication system, where the first configuration information includes a related parameter for generating a channel impulse response training sequence CTS. The second terminal device generates the CTS based on the first configuration information and the session key. The CTS is used to determine a first measurement result in a second communication system. The first measurement result includes distance information between the first terminal device and the second terminal device. A bandwidth used in the second communication system is greater than a bandwidth used in the first communication system.

For example, the first communication system in this application may be a Wi-Fi system or a Bluetooth system.

For example, the second communication system in this application may be a UWB system.

Optionally, the first terminal device and the second terminal device are included in a same personal area network, and the personal area network is established through the first communication system.

With reference to the second aspect, in some implementations of the second aspect, that the second terminal device determines the CTS based on the first configuration information and the session key includes: The second terminal device determines the CTS based on the first configuration information, the session key, and an AES algorithm.

It should be understood that in this application, the first terminal device and the second terminal device need to generate CTSs based on the same parameter and in the same manner (that is, in a symmetric manner), that is, generate the same CTSs.

With reference to the second aspect, in some implementations of the second aspect, the method further includes: The second terminal device receives a ranging frame from the first terminal device in the second communication system. The second terminal device determines that the ranging frame includes the CTS. The second terminal device sends the ranging frame to the first terminal device in the second communication system.

With reference to the second aspect, in some implementations of the second aspect, the method further includes: The second terminal device receives the first measurement result from the first terminal device in the first communication system.

With reference to the second aspect, in some implementations of the second aspect, the first configuration information includes at least one of the following parameters: a code length of a preamble code used by the CTS, an index of the preamble code used by the CTS, a length of a cyclic prefix CP of the CTS, a quantity of segments included in the CTS, a quantity of preamble code symbols in each segment of the CTS, and a quantity of base symbols in a gap between two adjacent segments in the CTS.

With reference to the second aspect, in some implementations of the second aspect, a length of the session key is 128 bits or 256 bits.

For effective effects of the second aspect or any possible implementation of the second aspect, refer to descriptions in the first aspect. Details are not described herein again.

According to a third aspect, this application provides a communication apparatus. The communication apparatus has a function of implementing the method according to the first aspect or any possible implementation of the first aspect. The function may be implemented by hardware, or may be implemented by hardware executing corresponding software. The hardware or the software includes one or more units corresponding to the foregoing function, for example, a processing unit and/or a communication unit.

In an implementation, the apparatus is a first terminal device. When the apparatus is the first terminal device, the communication unit may be a transceiver or an input/output interface, and the processing unit may be at least one processor. For example, the transceiver may be a transceiver circuit. For example, the input/output interface may be an input/output circuit.

In another implementation, the apparatus is a chip, a chip system, or a circuit used in the first terminal device. When the apparatus is the chip, the chip system, or the circuit used in the first terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a fourth aspect, this application provides a communication apparatus. The communication apparatus has a function of implementing the method according to the second aspect or any possible implementation of the second aspect. The function may be implemented by hardware, or may be implemented by hardware executing corresponding software. The hardware or the software includes one or more units corresponding to the foregoing function, for example, a processing unit, a receiving unit, or a sending unit.

In an implementation, the apparatus is a second terminal device. When the apparatus is the second terminal device, the communication unit may be a transceiver or an input/output interface, and the processing unit may be at least one processor. For example, the transceiver may be a transceiver circuit. For example, the input/output interface may be an input/output circuit.

In another implementation, the apparatus is a chip, a chip system, or a circuit used in the second terminal device. When the apparatus is the chip, the chip system, or the circuit used in the second terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a fifth aspect, this application provides a communication device, including at least one processor. The at least one processor is coupled to at least one memory. The at least one memory is configured to store a computer program or instructions. The at least one processor is configured to invoke the computer program or the instructions from the at least one memory and run the computer program or the instructions, to enable the communication device to perform the method according to the first aspect or any possible implementation of the first aspect.

In an implementation, the apparatus is a first terminal device.

In another implementation, the apparatus is a chip, a chip system, or a circuit used in the first terminal device.

According to a sixth aspect, this application provides a communication device, including at least one processor. The at least one processor is coupled to at least one memory. The at least one memory is configured to store a computer program or instructions. The at least one processor is configured to invoke the computer program or the instructions from the at least one memory and run the computer program or the instructions, to enable the communication device to perform the method according to the second aspect or any possible implementation of the second aspect.

In an implementation, the apparatus is a second terminal device.

In another implementation, the apparatus is a chip, a chip system, or a circuit used in the second terminal device.

According to a seventh aspect, this application provides a processor, and the processor is configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eighth aspect, this application provides a computer-readable storage medium. The computer-readable storage medium stores computer instructions. When the computer instructions are run on a computer, the method according to the first aspect or any possible implementation of the first aspect is performed.

According to a ninth aspect, this application provides a computer-readable storage medium. The computer-readable storage medium stores computer instructions. When the computer instructions are run on a computer, the method according to the second aspect or any possible implementation of the second aspect is performed.

According to a tenth aspect, this application provides a computer program product. The computer program product includes computer program code. When the computer program code is run on a computer, the method according to the first aspect or any possible implementation of the first aspect is performed.

According to an eleventh aspect, this application provides a computer program product. The computer program product includes computer program code. When the computer program code is run on a computer, the method according to the second aspect or any possible implementation of the second aspect is performed.

According to a twelfth aspect, a communication system is provided. The communication system includes the communication devices described in the fifth aspect and the sixth aspect.

According to a thirteenth aspect, a method for secure ranging integrating broadband and narrowband is provided. The method includes: establishing an inter-device communication link and obtaining a session key through a narrowband system, to form a personal area network; sending, by the narrowband system, a ranging control frame that includes secure ranging generation sequence configuration CTSC; waking up a broadband system to prepare for ranging; generating, by the broadband system, a CTS, to complete inter-device ranging; and reporting, by the broadband system, a measurement result to the narrowband system, to broadcast the measurement result to another device through the narrowband system.

With reference to the thirteenth aspect, in some implementations of the thirteenth aspect, the generating, by the broadband system, a CTS, to complete inter-device ranging includes: generating the CTS based on the session key and the CTSC; and splicing a preamble code and the CTS to generate a ranging frame, and sending and receiving the ranging frame, to complete inter-device ranging of the broadband system.

With reference to the thirteenth aspect, in some implementations of the thirteenth aspect, the method further includes: determining first information based on the CTSC. The generating, by the broadband system, a CTS, to complete inter-device ranging includes: inputting the first information and the session key into an AES module to generate a pseudorandom bit; inputting the pseudorandom bit into a CTS generation module to generate the CTS; and splicing a preamble code and the CTS to generate a ranging frame, and sending and receiving the ranging frame, to complete inter-device ranging of the broadband system.

According to a fourteenth aspect, this application provides a communication apparatus. The communication apparatus has a function of implementing the method according to the first aspect or any possible implementation of the first aspect. The function may be implemented by hardware, or may be implemented by hardware executing corresponding software. The hardware or the software includes one or more units corresponding to the foregoing function, for example, a processing unit, a receiving unit, or a sending unit.

According to a fifteenth aspect, this application provides a communication device, including at least one processor. The at least one processor is coupled to at least one memory. The at least one memory is configured to store a computer program or instructions. The at least one processor is configured to invoke the computer program or the instructions from the at least one memory and run the computer program or the instructions, to enable the communication device to perform the method according to the first aspect or any possible implementation of the first aspect.

According to a sixteenth aspect, this application provides a communication device, including a processor, a memory, and a transceiver. The memory is configured to store a computer program. The processor is configured to invoke and run the computer program stored in the memory, and control the transceiver to send or receive a signal, to enable the communication device to perform the method according to the first aspect or any possible implementation of the first aspect.

According to a seventeenth aspect, this application provides a communication apparatus, including a processor and a communication interface. The communication interface is configured to receive a signal and transmit the received signal to the processor. The processor processes the signal, to enable the communication apparatus to perform the method according to the first aspect or any possible implementation of the first aspect.

Optionally, the communication interface may be an interface circuit, an input/output interface, or the like. The processor may be a processing circuit, a logic circuit, or the like.

Optionally, the communication apparatus according to the seventeenth aspect may be a chip or an integrated circuit.

According to an eighteenth aspect, this application provides a computer-readable storage medium. The computer-readable storage medium stores computer instructions. When the computer instructions are run on a computer, the method according to the first aspect or any possible implementation of the first aspect is performed.

According to a nineteenth aspect, this application provides a computer program product. The computer program product includes computer program code. When the computer program code is run on a computer, the method according to the first aspect or any possible implementation of the first aspect is performed.

### BRIEF DESCRIPTION OF DRAWINGS

FIG. 1 is a diagram of two application scenarios according to this application;
FIG. 2 is a diagram of an architecture of a ranging and positioning system according to this application;
FIG. 3 is a diagram of a UWB ranging method according to this application;
FIG. 4 is a flowchart of STS generation according to this application;
FIG. 5 is a diagram of a format of a UWB ranging frame according to this application;
FIG. 6 is a diagram of an SHR frame structure according to this application;
FIG. 7 is a diagram of inter-device ranging according to this application;
FIG. 8 is a schematic flowchart of a secure ranging method according to this application;
FIG. 9 is a diagram of CTS generation according to this application;
FIG. 10 is a diagram of a CTS generated based on a pseudorandom bit and first configuration information according to this application;
FIG. 11 is a block diagram of a communication apparatus 1000 according to this application;
FIG. 12 is a diagram of a structure of a communication apparatus 10 according to this application;
FIG. 13 is an example of a communication system to which an embodiment of this application is applicable;
FIG. 14 is a schematic flowchart of a method for secure ranging integrating broadband and narrowband according to this application;
FIG. 15 is a diagram of an input/output procedure of CTS sequence generation according to this application;
FIG. 16 is a diagram of another input/output procedure of CTS sequence generation according to this application;
FIG. 17 is a block diagram of a communication apparatus 100 according to this application; and
FIG. 18 is a diagram of a structure of a communication apparatus 200 according to this application.

### DESCRIPTION OF EMBODIMENTS

The following describes technical solutions of embodiments in this application with reference to accompanying drawings.

Embodiments of this application may be applied to a wireless personal area network (wireless personal area network, WPAN) based on a UWB technology. Currently, a standard used by the WPAN is an institute of electrical and electronics engineer (institute of electrical and electronics engineer, IEEE) 802.15 series. The WPAN may be used for communication between digital auxiliary devices in a small range, such as a telephone, a computer, and an auxiliary device, and a working range of the WPAN is usually within l0 m. Technologies that support the wireless personal area network include Bluetooth (Bluetooth), Zigbee (Zigbee), ultra-wideband, IrDA infrared connection technology (infrared), HomeRF, and the like. A person skilled in the art easily understands that various aspects in this application may be extended to another network using various standards or protocols, for example, a wireless local area network (Wireless Local Area Network, WLAN), a high-performance radio LAN (High-Performance Radio LAN, HIPERLAN) (a wireless standard similar to an IEEE 802.11 standard, mainly used in Europe), a wide area network (WAN), or another known or future network. From a perspective of network composition, the WPAN is located at a bottom layer of an entire network architecture and is used for a wireless connection between devices in a small range, that is, a point-to-point short-distance connection. The WPAN may be considered as a short-distance wireless communication network. Based on different application scenarios, the WPANs are further classified into a high rate (high rate, HR)-WPAN and a low rate (low rate)-WPAN. The HR-WPAN may be used to support various high-rate multimedia applications, including high-quality sound image delivery, multi-megabyte music and image document transmission, and the like. The LR-WPAN may be used for common services in daily life.

In the WPAN, devices may be classified into a full-function device (full-function device, FFD) and a reduced-function device (reduced-function device, RFD) based on communication capabilities of the devices. The FFD devices may communicate with each other, and the FFD device and the RFD device may communicate with each other. The RFD devices cannot directly communicate with each other, and can only communicate with the FFD device, or forward data externally through one FFD device. The FFD device associated with the RFD is referred to as a coordinator (coordinator) of the RFD. The RFD device is mainly used for a simple control application, such as a light switch and a passive infrared sensor. A small amount of data is transmitted, and a small quantity of transmission resources and communication resources are occupied. Therefore, costs of the RFD device are low. The coordinator may also be referred to as a personal area network (personal area network, PAN) coordinator, a central control node, or the like. The PAN coordinator is a main control node of an entire network, and each ad hoc network can have only one PAN coordinator which has member identity management, link information management, and a packet forwarding function. Optionally, the device in embodiments of this application may be a device that supports a plurality of WPAN standards, such as 802. 15.4a, 802. 15.4z, and a currently discussed version or a later version.

In embodiments of this application, the device may be a communication server, a router, a switch, a bridge, a computer, a mobile phone, a home smart device, a vehicle-mounted communication device, or the like.

In embodiments of this application, the device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specially limited in embodiments of this application, provided that a program that records code of the method provided in embodiments of this application can be run to perform communication according to the method provided in embodiments of this application. For example, the method provided in embodiments of this application may be performed by the FFD or the RFD, or a functional module that can invoke and execute the program in the FFD or the RFD.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a wireless channel, and various other media that can store, include, and/or carry instructions and/or data.

Alternatively, embodiments of this application may be applied to a wireless local area network system, for example, an internet of things (internet of things, IoT) or a vehicle-to-everything (Vehicle to X, V2X) network. Certainly, embodiments of this application are applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5^{th} generation (5^{th} generation, 5G) communication system, and a future 6^{th} generation (6^{th} generation, 6G) communication system.

The foregoing communication systems to which this application is applicable are merely examples for descriptions, and the communication systems to which this application is applicable are not limited thereto. This is uniformly described herein, and details are not described below again.

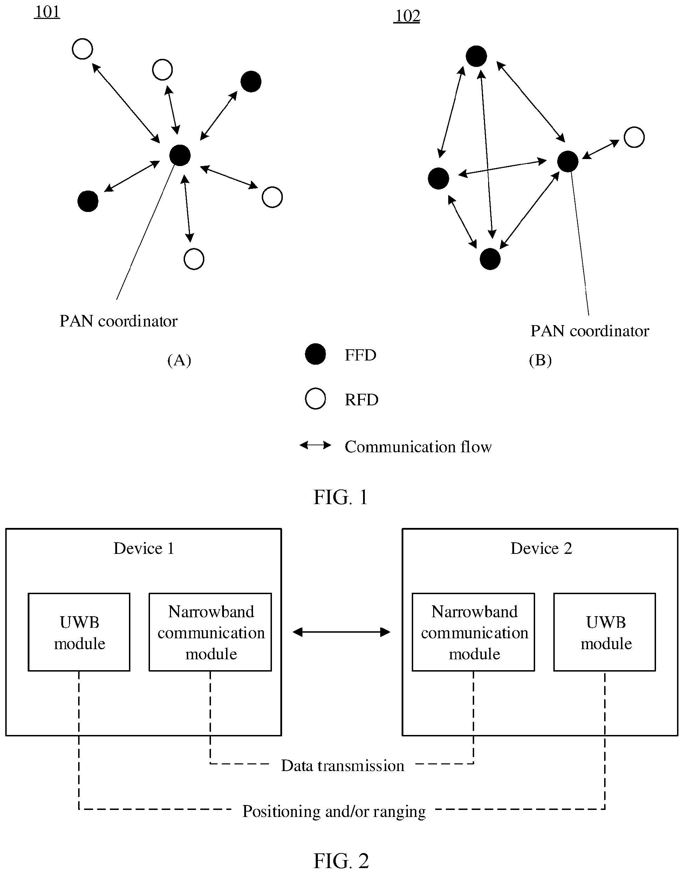

FIG. 1 is a diagram of two application scenarios according to this application. In a system 101 shown in (A) in FIG. 1, a plurality of FFD devices and a plurality of RFD devices form a communication system with a star topology (star topology), where one FFD is a PAN controller. In the communication system with the star topology, the PAN controller performs data transmission with one or more other devices. That is, a one-to-many or many-to-one data transmission architecture may be established between a plurality of devices. In a system 102 shown in (B) in FIG. 1, a plurality of FFD devices and one RFD device form a communication system with a peer-to-peer topology (peer-to-peer topology), where one FFD is a PAN controller. In the communication system with the peer-to-peer topology, a many-to-many data transmission architecture may be established between a plurality of different devices.

It should be understood that (A) in FIG. 1 and (B) in FIG. 1 are merely simplified diagrams for ease of understanding, and do not constitute a limitation on an application scenario of this application. For example, the system 101 and/or the system 102 may further include another FFD, and/or another RFD, and/or the like.

To facilitate understanding of the technical solutions in embodiments of this application, some terms or concepts in embodiments of this application are first briefly described.
1. UWB technology: The UWB technology is a wireless carrier communication technology that uses a nanosecond-level non-sinusoidal narrow impulse to transmit data. Therefore, the technology occupies a wide spectrum range. Because a UWB system has an excessively narrow pulse and an extremely low radiation spectrum density, the UWB system has advantages of a strong multipath resolution capability, low power consumption, high confidentiality, and the like, which facilitates coexistence of the UWB system with another system, to improve spectrum utilization and system capacity.

As the Federal Communications Commission (Federal Communications Commission, FCC) approved use of the UWB technology in a civilian field in 2002, ultra-wideband wireless communication becomes one of popular physical layer technologies for short-distance and high-speed wireless networks. Many world-renowned large companies, research institutes, and standardization organizations are actively engaged in research, development, and standardization of the ultra-wideband wireless communication technology. The Institute of Electrical and Electronic Engineers (Institute of Electrical and Electronic Engineers, IEEE) has incorporated the UWB technology into IEEE 802 series wireless standards, and has released a UWB technology-based WPAN standard IEEE 802.15.4a and an evolved version IEEE 802.15.4z of IEEE 802.15.4a. Currently, formulation of a WPAN standard 802.15.4ab for a next-generation UWB technology has been put on the agenda.

2. Time division multiple access (Time Division Multiple Access, TDMA): The time division multiple access is a communication technology used to share a transmission medium or network. A plurality of users are allowed to use a same frequency in different time slices (for example, slots, symbols, and frames). The users transmit quickly one after another. Each user uses a time slice of the user. The TDMA technology allows the plurality of users to share a same transmission medium (for example, a radio frequency).

3. TDMA slot allocation: A condition for a network to access a channel in a TDMA manner is that slots of nodes in the network are synchronized. After slot synchronization is implemented on the entire network, how to effectively allocate the slots to achieve better system performance needs to be considered. Specifically, in a TDMA frame structure, one TDMA frame includes several subframes, and one subframe includes several slots. All or some slots in the TDMA frame structure may be allocated to the plurality of users based on data traffic required by the users, so that each user has a different slot, to ensure that signals from the users do not interfere with each other.

In addition, in the TDMA manner, uplink and downlink transmission may be simultaneously performed on a slot of each user.

It should be understood that a TDMA slot allocation method is not limited in embodiments of this application. Refer to an existing allocation algorithm or a TDMA slot allocation method provided in a future communication technology.

4. Wireless personal area network (Wireless Personal Area Network, WPAN): The wireless personal area network is a new wireless communication network technology provided to implement seamless wireless connections with a small activity radius and rich service types for specific groups. In terms of network composition, the WPAN is located at the end of an entire network chain, and is used to implement a connection between terminals at a same location, for example, a connection between a mobile phone and a Bluetooth headset. A coverage area of the WPAN is usually within a radius of 10 m and a WPAN device needs to run on a licensed wireless frequency band. The WPAN device has advantages of a low price, a small size, ease of operation, low power consumption, and the like.

5. UWB ranging and/or positioning: With development of an indoor positioning technology, a UWB ranging technology and/or a UWB positioning technology are/is increasingly widely applied. UWB uses a pulse with a pulse width of only a nanosecond level as a basic signal of the UWB. The UWB features a high transmission rate, a large system capacity, a large spectrum bandwidth, and the like, has an extremely low power spectrum density, and may coexist with an existing short-distance communication system and the like. These features of the UWB make the UWB have high temporal resolution, a strong anti-multipath capability, and high ranging and positioning accuracy that is up to a centimeter level. Implementation of ranging and positioning in a complex multipath environment has become a research hotspot.

For ease of understanding, a ranging and positioning system to which the UWB ranging technology is applied is briefly described with reference to FIG. 2. FIG. 2 is a diagram of an architecture of a ranging and positioning system according to an embodiment of this application. As shown in FIG. 2, the ranging and positioning system includes a plurality of devices (for example, a device 1 and a device 2 in FIG. 2), which may be apparatuses in embodiments of this application. Each device includes at least a UWB module and a narrowband communication module. Positioning and/or ranging may be performed between a UWB module of the device 1 and a UWB module of the device 2. Data transmission may be performed between a narrowband communication module of the device 1 and a narrowband communication module of the device 2 through a radio link.

In this application, the UWB module may be understood as an apparatus, a chip, a system, or the like for implementing a UWB wireless communication technology. Correspondingly, the narrowband communication module may be understood as an apparatus, a chip, a system, or the like for implementing a narrowband communication technology (such as Wi-Fi, Bluetooth, or Zigbee (Zigbee protocol)). In one device (device), the UWB module and the narrowband communication module may be different apparatuses or chips. Certainly, the UWB module and the narrowband communication module may alternatively be integrated into one apparatus or chip. An implementation of the UWB module and the narrowband communication module in the device is not limited in embodiments of this application. A UWB technology can make a communication apparatus have high data throughput and make apparatus positioning have high accuracy.

The device in this application may be a wireless communication chip, a wireless sensor, or a wireless communication terminal, for example, a user terminal, a user apparatus, an access apparatus, a subscriber station, a subscriber unit, a mobile station, a user agent, or user equipment that supports a Wi-Fi communication function. The user terminal may include various handheld devices, vehicle-mounted devices, wearable devices, internet of things (internet of things, IoT) devices, computing devices, or other processing devices connected to a wireless modem that have a wireless communication function, user equipment (user equipment, UE) of various forms, a mobile station (mobile station, MS), a terminal (terminal), a terminal device (terminal device), a portable communication device, a handheld device, a portable computing device, an entertainment device, a game device or system, a global positioning system device, any other proper device configured to perform network communication via a wireless medium, and the like. In addition, the device may support the 802.15.4ab standard or a next-generation standard of 802.15.4ab. The device may alternatively support a plurality of standards, such as 802.15.4a, 802.15.4-2011, 802.15.4-2015, and 802. 15.4z. The device may alternatively support a plurality of wireless local area network (wireless local area networks, WLAN) standards of an 802.11 family, such as 802.11ax, 802.11ac, 802.11n, 802.11g, 802.11b, 802.11a and 802.11be.

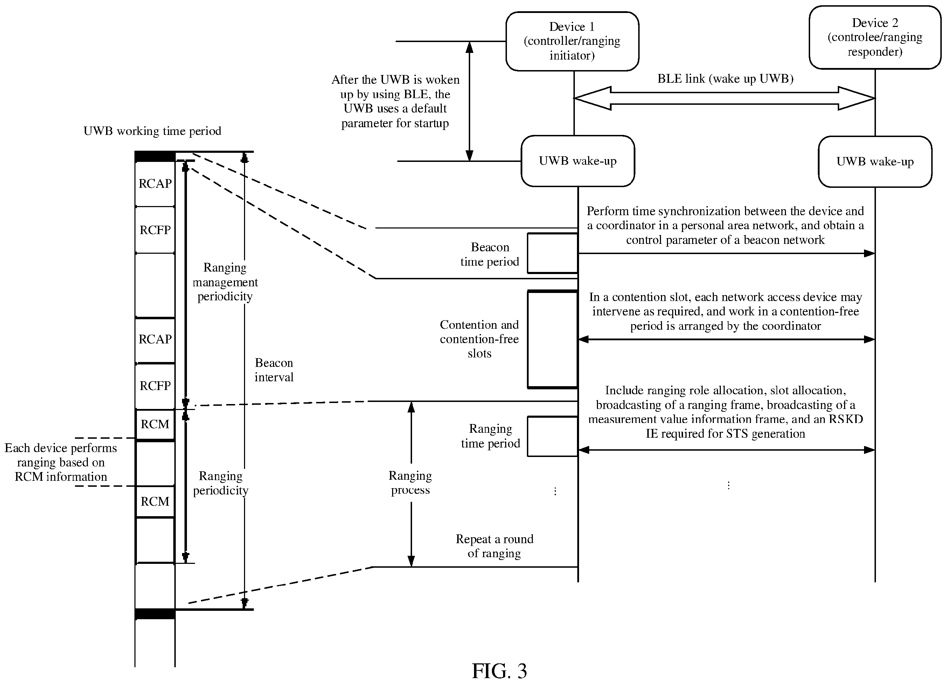

For ease of understanding, the following briefly describes a UWB ranging method with reference to FIG. 3. FIG. 3 is a diagram of a UWB ranging method according to an embodiment of this application. Usually, UWB needs to use a narrowband signal such as near field communication (near field communication, NFC), Bluetooth low energy (Bluetooth low energy, BLE), or wireless fidelity (wireless fidelity, Wi-Fi) as a driver. The UWB is woken up in a scenario required by a user. After being woken up, the UWB establishes a personal area network, performs time division multiple access (time division multiple access, TDMA) slot allocation, and completes required ranging and positioning functions. For example, a one-device-to-one-device ranging procedure is used as an example. The procedure includes the following steps:
Step 1: Before the UWB is started, wake up the UWB by using the BLE; and after the UWB is woken up, the UWB uses a default parameter, for example, a channel number (channel number), a preamble code (preamble code), or a rate that is defined during initialization.
Step 2: After the UWB is woken up and started, perform networking and ranging (ranging).
Step 3: Send a beacon frame in a beacon (Beacon) phase. The beacon frame is used to implement time synchronization between a device and a coordinator and beacon network parameter broadcasting in a UWB personal area network.

In the figure, two devices are used as an example. In the beacon phase, a device 1 is defined as the coordinator, and is responsible for sending the beacon frame, to implement parameter broadcasting and time synchronization in a personal area network. After receiving the beacon frame, a device 2 accesses the personal area network of the device 1 (the coordinator) as required.

Step 4: Complete accessing of a device to the network and interaction between specified devices in a contention and contention-free phase.

Optionally, the device 1 (the coordinator) may indicate, by using the beacon frame, whether this phase (the contention and contention-free phase) is required. If this phase is required, another device (for example, a device n) may intervene, in this phase, in the personal area network established by the device 1. If this phase is not required, the current personal area network and related devices in the personal area network are maintained.

Specifically, in a ranging contention period (ranging contention access period, RCAP) shown in FIG. 3, each network access device may access the network (access the personal area network) as required. In a contention-free period (ranging contention-free period, RCFP), work in the contention-free period is arranged by the coordinator, and slot allocation required for necessary inter-device interaction may be performed.

Step 5: In a ranging process, the device 1 implements ranging with the device 2.

① In the ranging process, there are four role definitions in total: a controller (controller), a controlee (controlee), a ranging initiator (initiator), and a ranging responder (responder). For example, in FIG. 3, the device 1 serves as both a controller (controller) and a ranging initiator (initiator), and the device 2 serves as both a controlee (controlee) and a ranging responder (responder). The controller (controller) is responsible for sending a ranging control frame (RCM) including the role definitions, slot allocation control, and the like. Specifically, devices to be ranging initiators (initiators) and devices to be ranging responders (responders) are defined, and time slices of all time periods are allocated by using the ranging control frame based on TDMA.

In addition, for STS generation, the ranging initiator needs to send a ranging STS key data (ranging STS key data, RSKD) information element (Information element, IE) to the ranging responder in advance to perform plaintext negotiation. The RSKD IE includes key parameters such as V1, V2, V3, V counter, and an STS key (key). V1, V2, V3, and V counter each occupy 4 bytes, each byte occupies 32 bits, and the STS key occupies 128 bits.

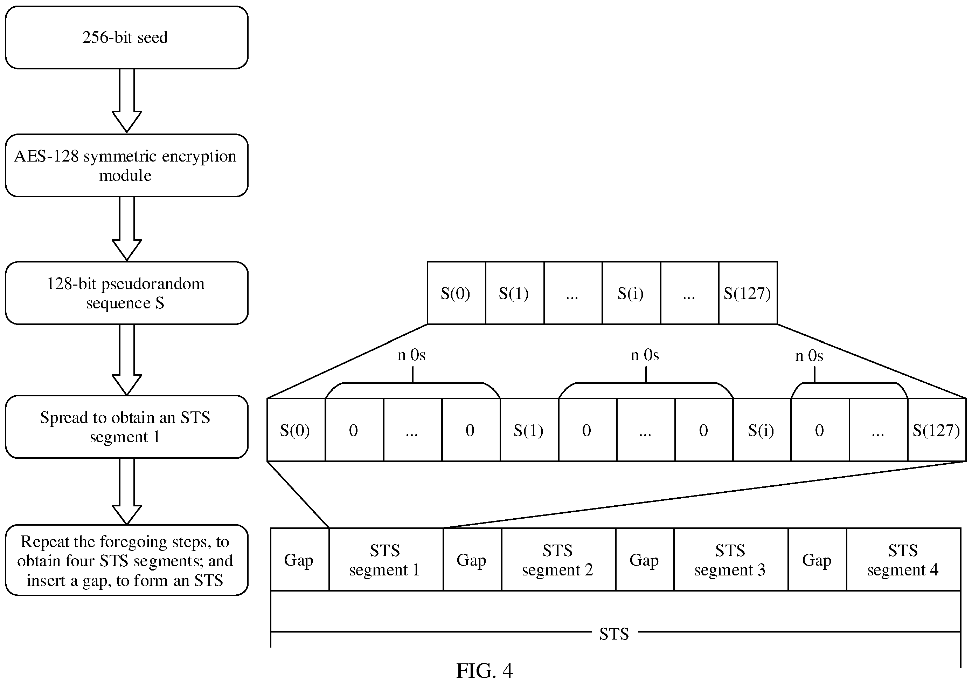

FIG. 4 is a schematic flowchart of STS generation. For example, in FIG. 4, an example in which an STS includes four STS segments is used for description. In FIG. 4, V1, V2, V3, V counter, and an STS key (key) form a 256-bit (bit) seed. The 256-bit seed is used as input of the four different STS segments (STS segments), and is encrypted by using an advanced encryption standard (advanced encryption standard, AES), to obtain a 128-bit pseudorandom sequence S. Then the sequence S is spread to obtain an STS segment 1, and the foregoing steps are repeated to obtain the STS including the four STS segments. Optionally, a quantity represented by n in FIG. 4 may be configured. Optionally, a gap (GAP) in the STS in FIG. 4 may be 512 0s.

② The device 1 (the ranging initiator) initiates an initial ranging frame, and the device 2 (the ranging responder) feeds back the ranging frame to the ranging initiator after receiving the initial ranging frame.

Specifically, in a UWB technology, a carrier in a conventional communication system does not need to be used. An extremely narrow pulse of a nanosecond or sub-nanosecond level is sent or received for data transmission. Therefore, synchronization of a transceiver device is critical in the UWB technology. Synchronization of the transceiver device may be understood as that a physical layer protocol data unit (physical layer protocol data unit, PPDU) is sent in a form of pulse signal, and a receiving end determines a specific pulse signal in a plurality of received pulse signals that is a start of the PPDU to be received by the receiving end. Currently, synchronization of the transceiver device is mainly implemented by using a synchronization header (synchronization header, SHR) in the PPDU. Specifically, the receiving end may perform correlation detection based on the synchronization header, to determine the specific pulse signal in the plurality of received pulse signals that is the start of the PPDU to be received by the receiving end.

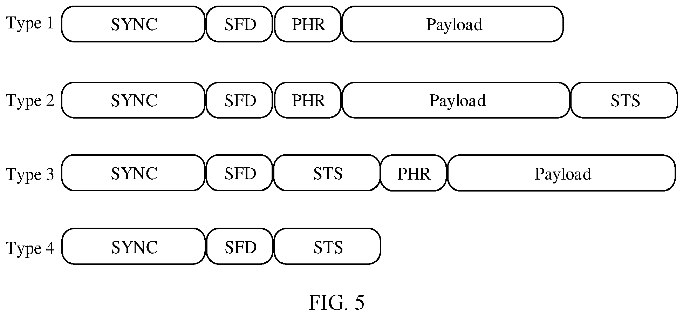

For example, a form of the UWB ranging frame may be one of four types shown in FIG. 5. A ranging frame shown in a type 1 includes a synchronization header (synchronization header, SHR), a physical header (physical header, PHR), and a payload (payload). The SHR includes a synchronization (synchronization, SYNC) field and a start frame delimiter (start frame delimiter, SFD) field. A type 2 and a type 3 each include an SHR, a PHR, a payload, and an STS. For a specific composition sequence, refer to FIG. 5. A type 4 includes an SHR and an STS.

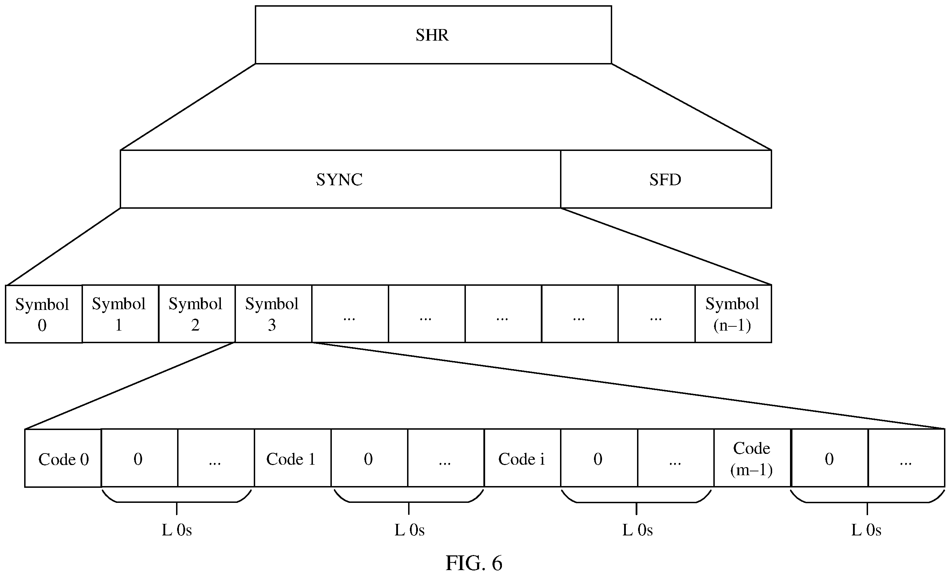

FIG. 6 is a detailed diagram of composition of an SHR. As described above, the SHR includes an SYNC field and an SFD field. The SYNC field includes a plurality of repeated basic symbols, and the basic symbols are generated based on a preamble code sequence. A length of a preamble code (preamble code) may be 31, 91, or 127, which may also be understood as that a code length of the preamble code is 31, 91, or 127. Detailed descriptions of the preamble code are shown in Table 1. When the code length of the preamble code is 31, that is, there are correspondingly 31 codes (codes) in total in FIG. 6, index values of the preamble code are 1 to 8, that is, there are eight different code words. When the code length of the preamble code is 91, that is, there are correspondingly 91 codes (codes) in total in FIG. 6, index values of the preamble code are 25 to 32, that is, there are eight different code words. When the code length of the preamble code is 127, that is, there are correspondingly 127 codes (codes) in total in FIG. 6, index values of the preamble code are 9 to 24, that is, there are 16 different code words. As shown in FIG. 6, L 0s are inserted after a code i (0≤i≤m, and i is a natural number) of the codes, that is, a Kronecker product is calculated. L is an integer. A length of L is optional, and is usually 7 or 15. A value of the code i is one of +1, -1, and 0. Each symbol (symbol) includes m different codes i. The m different codes i are repeated for n times to form a symbol. n repeated symbols form the SYNC.

**Table 1**

| Index of a preamble code | Code length of a preamble code | Preamble code=[code 0, ..., and code m] |
|---|---|---|
| 1 to 8 | 31 | Code 0 to Code 30 |
| 9 to 24 | 127 | Code 0 to Code 126 |
| 25 to 32 | 91 | Code 0 to Code 90 |

③ The device 1 calculates time of flight of the ranging frame between the device 1 and the device 2, to complete inter-device ranging.

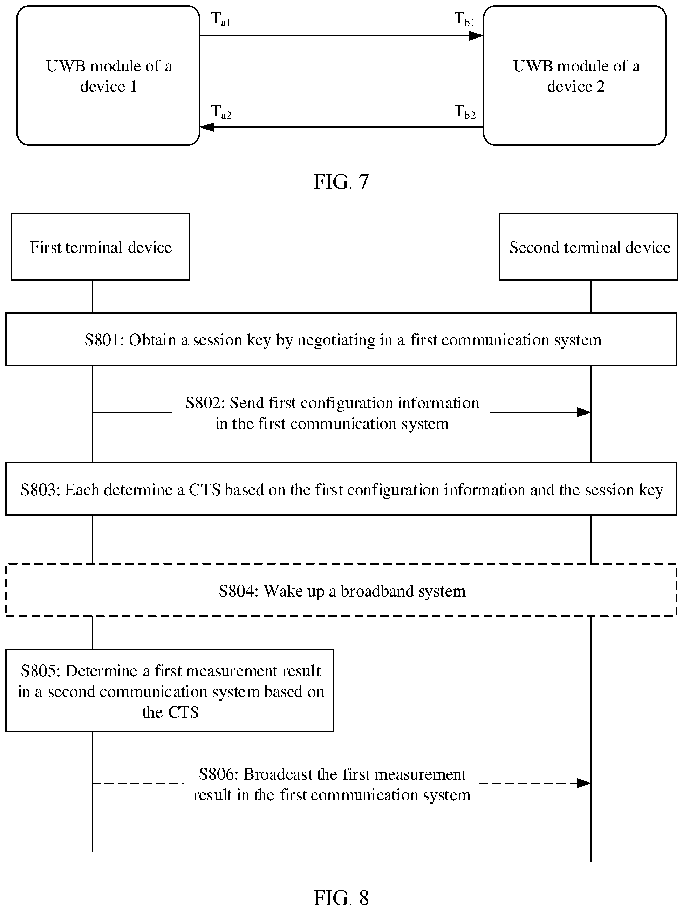

For example, with reference to FIG. 7, the following briefly describes how to determine a distance between the device 1 and the device 2 by using the time of flight of the ranging frame. UWB modules of the device 1 and the device 2 separately generate an independent timestamp since startup. The UWB module of the device 1 transmits the ranging frame at Tₐ₁ on a timestamp of the UWB module of the device 1, and the ranging frame is received by the UWB module of the device 2 at a moment T_{b1} on a timestamp of the UWB module of the device 2. Then, the UWB module of the device 2 feeds back the ranging frame to the device 1 at a moment T_{b2}, and the ranging frame is received by the UWB module of the device 1 at a moment Tₐ₂ on the timestamp of the UWB module of the device 1. Therefore, the time of flight of the ranging frame between the two terminal devices may be calculated, to determine a flight distance S. S is twice the distance between the two terminal devices. Specifically, S=C*[(Tₐ₂-Tₐ₁)-(T_{b2}-T_{b1})], where C is a speed of light, and T_{b1}-T_{b1} is response time for the device 2 to process data.

It should be understood that broadcasting of a ranging result is completed by using the UWB, and is irrelevant to the BLE. Then, a new round of ranging may be repeatedly performed according to the foregoing steps, and details are not described herein again.

In the UWB ranging solution shown in FIG. 3, a UWB ultra-wideband system needs to complete establishment of the personal area network, complexity is high, and STS generation requires the devices of both parties to complete parameter negotiation in the UWB system. Consequently, a negotiation process occupies long working time of the broadband system, power consumption is high, a maximum of four STS segments (STS segments) can be configured for the STS, STS parameter configuration is limited, and flexibility is poor, which brings a specific security risk.

In view of this, this application provides a secure ranging method, to effectively resolve the foregoing technical problem. The following provides descriptions with reference to FIG. 8.

FIG. 8 is a schematic flowchart of a secure ranging method according to this application. The method may include the following steps.

S801: A first terminal device obtains a session key by negotiating with a second terminal device in a first communication system. Correspondingly, the second terminal device obtains the session key by negotiating with the first terminal device in the first communication system.

For example, the first communication system in this application may be a narrowband system such as a Wi-Fi system or a Bluetooth system. For ease of understanding and differentiation, the first communication system is referred to as the narrowband system in the following descriptions of this application.

Optionally, the first terminal device and the second terminal device are included in a same personal area network, and the personal area network is established through the narrowband system. It may be understood that, in a personal area network established by a UWB system currently, a maximum of seven devices are supported, and a size of the personal area network is limited. However, in this application, the personal area network is established through the narrowband system, so that more devices can be supported by the network. That is, the network is larger. In addition, the UWB system does not need to participate in establishment of the personal area network, so that power consumption and design logic complexity can be reduced.

That the first terminal device obtains the session key by negotiating with the second terminal device in the narrowband system may also be understood as that a narrowband communication module of the first terminal device obtains the session key by negotiating with a narrowband communication module of the second terminal device. In the following, that the two terminal devices interact with each other in the narrowband system may also mean that the narrowband communication modules of the two terminal devices interact with each other. Related descriptions are not enumerated.

For example, a length of the session key is 128 bits or 256 bits.

For ease of description, in this application, an example in which the first terminal device is a controller and a ranging initiator, and the second terminal device is a controlee and a ranging responder is used for description.

S802: The first terminal device sends first configuration information to the second terminal device in the narrowband system, where the first configuration information includes a related parameter for generating a channel impulse response training sequence (channel impulse response training sequence, CTS). Correspondingly, the second terminal device receives the first configuration information from the first terminal device in the narrowband system.

Optionally, the first configuration information in this application may also be referred to as channel impulse response training sequence configuration (channel impulse response training sequence configuration, CTSC) information. A name of the first configuration information is not limited in this application.

Optionally, the first configuration information is included in a ranging control frame. For a function of the ranging control frame, refer to the descriptions in FIG. 2. Details are not described herein again.

Optionally, the first configuration information includes at least one of the following parameters: a code length of a preamble code used by the CTS, an index of the preamble code used by the CTS, a length of a cyclic prefix (cyclic prefix, CP) of the CTS, a quantity of segments (CTS segments) included in the CTS, a quantity of preamble code symbols (symbols) in each CTS segment, and a quantity of base symbols in a gap (GAP) between two adjacent CTS segments in the CTS.

For example, possible detailed field composition of the first configuration information is shown in Table 2.

**Table 2**

| Bits | 0 and 1 | 2 to 6 | 7 to 9 | 10 to 12 | 13 | 14 to 16 |
|---|---|---|---|---|---|---|
| Field | Code length | Sync code index | Sync symbol number | Cts symbol number | Cts segment symbol number | Gap base symbol number |

| Bits | 17 | 18 and 19 | 20 to 23 | 24 to 31 | | |
|---|---|---|---|---|---|---|
| Field | Security mode | Cts CP length | Session key index | Reserved | | |

Optionally, the specific field included in the first configuration information in this application may also be referred to as CTSC information element (information element, IE) information. This is not limited in this application.

Specific meanings of the fields in Table 2 are shown in Table 3.

**Table 3**

| Field | Description | Bit width | Value |
|---|---|---|---|
| Code length | Code lengths of preamble codes used by SYNC and a CTS | 2 | 0: 31 |
| | | | 1: 63 |
| | | | 2: 91 |
| | | | 3: 127 |
| | | | Unit: symbol |
| Sync code index | Indicate, in a low power consumption mode, indexes of the preamble codes used by the SYNC and the CTS; or | 5 | 1 to 32 |
| | indicate, in a high power consumption mode, an index of the preamble code used by the SYNC | | |
| Sync symbol number | Quantity of preamble code symbols in the SYNC | 3 | 0: 16 |
| | | | 1: 32 |
| | | | 2: 64 |
| | | | 3: 96 |
| | | | 4: 128 |
| | | | 5: 256 |
| Cts segment number | Quantity of segments in CTS | 3 | 0: 1 |
| | | | 1: 2 |
| | | | 2: 4 |
| | | | 3: 8 |
| | | | 4: 16 |
| | | | 5: 32 |
| Cts segment symbol number | Quantity of preamble code symbols in each CTS segment | 1 | 0: 16 |
| | | | 1: 32 |
| Gap base symbol number | Quantity of base symbols in a gap (Gap) between CTS segments | 3 | 0: 50 |
| | | | 1: 125 |
| | | | 3: 250 |
| | | | 4: 500 |
| | | | 5: 1000 |
| Security mode | Secure working mode | 1 | 0: low power consumption mode |
| | | | 1: high power consumption mode |
| Cts CP length | Length of a cyclic prefix of the CTS | 2 | 0: 0 |
| | | | 1: 64 |
| | | | 2: 96 |
| | | | 3: 128 |
| Session key index | Session key index used in a broadcast mode | 4 | 0x0 to 0xf (hexadecimal) |
| Reserved | Reserved | 8 | - |

S803: The first terminal device and the second terminal device each determine the CTS based on the first configuration information and the session key.

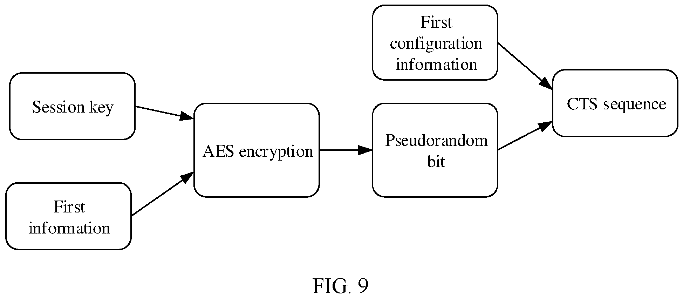

For example, FIG. 9 is a possible schematic flowchart of CTS generation. Steps of generating a CTS include:
① Obtain first information. The first information may be information obtained by splicing some or all the fields in the first configuration information in Table 2.

Optionally, a length of the first information is 128 bits or 256 bits. If the first information is not long enough, the first information is padded with 0.

For example, the first information may be: Codelength|ctsCodeIdx|Ctssymbolnumber|Ctssegmentsymbol number|Gapbasesymbolnumber|0...,

② Encrypt a session key and the first information by using an AES, to generate a pseudorandom bit sequence C; and generate a CTS based on the pseudorandom bit sequence C and the first configuration information.

Optionally, a length of the pseudorandom bit sequence C is 128 bits or 256 bits. For example, if the length of the pseudorandom bit sequence C is 128 bits, the random bit sequence C includes C(j), where 0≤j≤127, and j is a natural number.

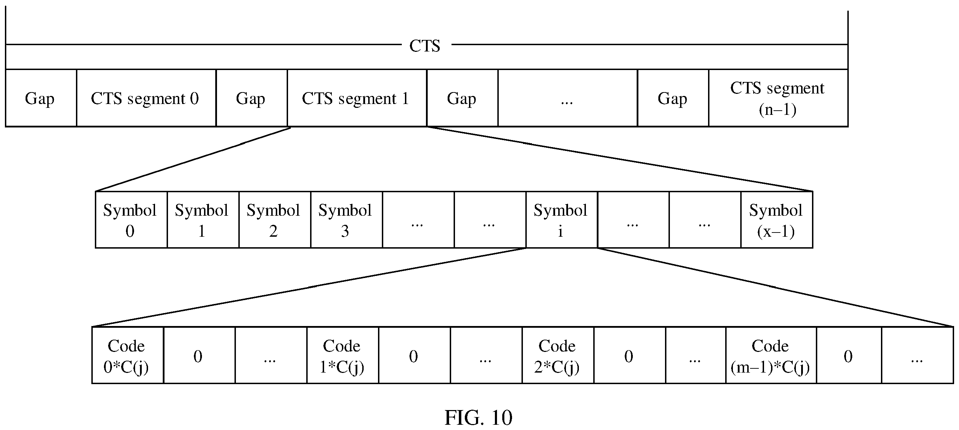

For example, FIG. 10 is a diagram of a CTS generated based on a pseudorandom bit and first configuration information. As shown in FIG. 10, the CTS may include n CTS segments (CTS segments), and a gap (that is, a value 0) may be inserted between two adjacent CTS segments. Each CTS segment includes x symbols (symbols). A composition manner of a symbol (i) is as follows: It is determined that a code length of a preamble code in the symbol (i) is m. Correspondingly, there are m codes (codes) in total in FIG. 10, that is, a code 0 (code 0) to a code (m-1). Each of the code 0 (code 0) to the code (m-1) is multiplied by C(j) in a pseudorandom bit sequence. For values of n, x, and m, refer to related descriptions of the first configuration information. Details are not described herein again.

It should be noted that, because each symbol in each CTS segment is formed based on different bits in the pseudorandom sequence C, a length of x is usually less than or equal to a length of the pseudorandom bit sequence C, to ensure that codes in each symbol can normally perform multiplication with the pseudorandom bit sequence C.

Optionally, a quantity of 0s between two adjacent codes in FIG. 10 is 8 or 10. This is not limited in this application.

For example, the CTS is generated based on the first configuration information and the session key, and the session key is a random sequence K. A difference between the generated CTS and the CTS in FIG. 10 lies in a composition manner of a symbol (i). In this manner, the composition manner of the symbol (i) is as follows: It is determined that a code length of a preamble code in the symbol (i) is m. Correspondingly, there are m codes (codes) in total in FIG. 10, that is, a code 0 (code 0) to a code (m-1). Each of the code 0 (code 0) to the code (m-1) is multiplied by K(j) in the random sequence K. For example, if a length of the random sequence K is 128 bits, the random sequence K includes K(j), where 0≤j≤127, and j is a natural number. A specific generation process is not described herein again.

It should be understood that the first terminal device and the second terminal device need to generate the CTSs based on the same parameter and in the same manner (that is, in a symmetric manner), that is, generate the same CTSs.

Optionally, the method further includes: S804: The first terminal device and the second terminal device wake up a second communication system to prepare for ranging. A bandwidth used when the first terminal device and the second terminal device communicate in the second communication system is greater than a bandwidth used when the first terminal device and the second terminal device communicate in the first communication system.

For example, the second communication system is a UWB system. For ease of understanding and differentiation, the second communication system is referred to as a broadband system in the following descriptions of this application.

It should be understood that, in the following, that the two terminal devices interact with each other in the broadband system may also mean that broadband modules of the two terminal devices interact with each other. Related descriptions are not enumerated.

That the first terminal device and the second terminal device wake up the broadband system may be understood as waking up the broadband modules of the first terminal device and the second terminal device.

Optionally, the first terminal device and the second terminal device wake up the broadband system by using a narrowband signal. For example, the first terminal device and the second terminal device may use the narrowband signal such as NFC, BLE, or Wi-Fi as a driver, to wake up the broadband system in a scenario required by a user.

Optionally, S803 may be performed before S804, or may be performed after S804. For example, S803 may be performed after S804. In this case, after the first terminal device wakes up the broadband system, the narrowband communication module of the first terminal device may also transparently transmit the session key and the first configuration information to the broadband module of the first terminal device, and the broadband module of the first terminal device determines the CTS based on the session key and the first configuration information. For another example, S803 may be performed before S804. The narrowband communication module of the first terminal device may determine the CTS, and then transparently transmit the CTS to the broadband module of the first terminal device. This is the same for the second terminal device, and details are not described herein again. For example, to reduce ranging waiting time, the first terminal device and the second terminal device may each determine the CTS before waking up the broadband system.

S805: The first terminal device determines a first measurement result in the second communication system based on the CTS. The first measurement result includes distance information between the first terminal device and the second terminal device.

Specifically, the first terminal device needs to first generate a ranging frame based on the CTS. Then, the broadband module of the first terminal device sends the ranging frame to the broadband module of the second terminal device. After receiving the ranging frame, the broadband module of the second terminal device processes the ranging frame based on the generated CTS, and then feeds back the ranging frame to the broadband module of the first terminal device. The first terminal device determines the first measurement result based on time of flight of the ranging frame between the two terminal devices. For how to determine the first measurement result based on flight, refer to descriptions in FIG. 7. Details are not described herein again.

For example, a specific form of the ranging frame may be the type 4 in FIG. 5. Only an SFD in the type 4 needs to be removed, and an STS needs to be replaced with the CTS.

For example, to reduce ranging waiting time, the first terminal device may generate the ranging frame before waking up the broadband system.

Optionally, in S806, the broadband module of the first terminal device transparently transmits the first measurement result to the narrowband module of the first terminal device. Then, the first terminal device broadcasts the first measurement result to another device in the personal area network through the narrowband system. For example, the narrowband module of the first terminal device sends the first measurement result to the narrowband module of the second terminal device.

It can be learned that in the foregoing technical solution, a link is established through the narrowband system, the narrowband system obtains the session key, and the secure CTS is further generated based on the session key. The devices of both parties generate the CTSs in the symmetric manner. The related parameter, in the first configuration information, for generating the CTS is defined in detail. A sequence length and the sequence gap of the CTS can be configured as required based on the first configuration information, to enhance flexibility and improve secure ranging performance. In addition, the narrowband system replaces the broadband system to perform key-related information negotiation, to reduce power consumption. In this method, data communication is performed in the narrowband system, and ranging is performed in the broadband system, so that high-accuracy ranging is implemented while low power consumption is considered.

It should be understood that sequence numbers of the foregoing processes do not mean an execution sequence. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by a device (for example, the first terminal device or the second terminal device) may also be implemented by a component (for example, a chip or a circuit) of the device.

The foregoing describes in detail the method provided in embodiments of this application with reference to FIG. 8. The foregoing method is mainly described from a perspective of interaction between the first terminal device and the second terminal device. It may be understood that, to implement the foregoing functions, the first terminal device and the second terminal device include corresponding hardware structures and/or software modules for performing the functions.

A person skilled in the art should be able to be aware that, in combination with units and algorithm steps of the examples described in embodiments disclosed in this specification, this application can be implemented in a form of hardware or a combination of hardware and computer software. Whether a function is performed by hardware or hardware driven by computer software depends on particular applications and design constraints of the technical solutions. A skilled person may use different methods to implement the described functions for each particular application, but this implementation should not be considered as beyond the scope of this application.

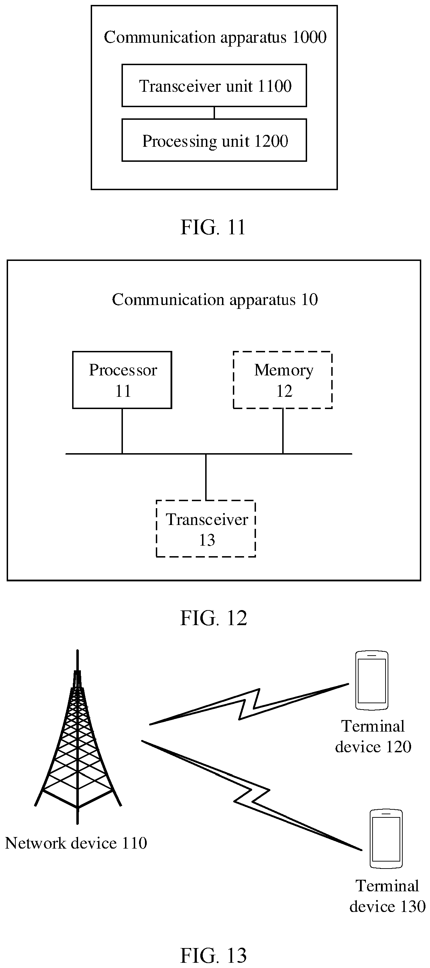

The following describes in detail communication apparatuses provided in embodiments of this application with reference to FIG. 11 and FIG. 12. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of the first terminal device or the second terminal device may be obtained through division based on the foregoing method examples. For example, each functional module may be obtained through division in correspondence to each function, or two or more functions may be integrated into one processing module. The integrated module may be implemented in a form of hardware, or may be implemented in a form of software functional module. It should be noted that module division in embodiments of this application is an example, and is merely logical function division. In actual implementation, there may be another division manner. An example in which each functional module is obtained through division in correspondence to each function is used below for description.

FIG. 11 is a block diagram of a communication apparatus according to an embodiment of this application. As shown in FIG. 11, the apparatus 1000 may include a transceiver unit 1100 and a processing unit 1200. The transceiver unit 1100 may communicate with the outside, and the processing unit 1200 is configured to perform data processing. The transceiver unit 1100 may also be referred to as a communication interface or a communication unit.

Optionally, the apparatus 1000 may further include a storage unit. The storage unit may be configured to store instructions and/or data. The processing unit 1200 may read the instructions and/or the data in the storage unit, to enable the apparatus to implement the foregoing method embodiments.

The apparatus 1000 may be configured to perform the actions performed by the transceiver devices (for example, the first terminal device and the second terminal device) in the foregoing method embodiments. In this case, the apparatus 1000 may be a transceiver device or a component that may be configured in the transceiver device. The transceiver unit 1100 is configured to perform sending-related and receiving-related operations of the transceiver device in the foregoing method embodiments. The processing unit 1200 is configured to perform processing-related operations of the transceiver device in the foregoing method embodiments.

In a design, the apparatus 1000 is configured to perform an action performed by the first terminal device in the foregoing method embodiments.

In another design, the apparatus 1000 is configured to perform an action performed by the second terminal device in the foregoing method embodiments.

It should be understood that a specific process in which the units perform the foregoing corresponding steps has been described in detail in the foregoing method embodiments. For brevity, details are not described herein again.

The processing unit 1200 in the foregoing embodiment may be implemented by at least one processor or a processor-related circuit. The transceiver unit 1100 may be implemented by a transceiver or a transceiver-related circuit. The storage unit may be implemented by at least one memory.

As shown in FIG. 12, an embodiment of this application further provides an apparatus 10. The apparatus 10 includes a processor 11, and may further include one or more memories 12. The processor 11 is coupled to the memory 12. The memory 12 is configured to store a computer program or instructions and/or data. The processor 11 is configured to execute the computer program or the instructions and/or the data stored in the memory 12, so that the methods in the foregoing method embodiments are performed. Optionally, the apparatus 10 includes one or more processors 11.

Optionally, the memory 12 may be integrated with the processor 11, or separately disposed.

Optionally, as shown in FIG. 12, the apparatus 10 may further include a transceiver 13, and the transceiver 13 is configured to receive and/or send a signal. For example, the processor 11 is configured to control the transceiver 13 to receive and/or send the signal.

In a solution, the apparatus 10 is configured to implement the operations performed by the transceiver devices (for example, the first terminal device and the second terminal device) in the foregoing method embodiments.

An embodiment of this application further provides a computer-readable storage medium. The computer-readable storage medium stores computer instructions used to implement the methods performed by the transceiver devices (for example, the first terminal device and the second terminal device) in the foregoing method embodiments.

For example, when a computer program is executed by a computer, the computer is enabled to implement the methods performed by the transceiver devices (for example, the first terminal device and the second terminal device) in the foregoing method embodiments.

An embodiment of this application further provides a computer program product including instructions. When the instructions are executed by a computer, the computer is enabled to implement the methods performed by the transceiver devices (for example, the first terminal device and the second terminal device) in the foregoing method embodiments.

An embodiment of this application further provides a communication system. The communication system includes the first terminal device and the second terminal device in the foregoing embodiments.

For explanations and beneficial effects of related content of any one of the apparatuses provided above, refer to the corresponding method embodiments provided above. Details are not described herein again.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in this embodiment of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification aims to include but is not limited to these memories and any memory of another proper type.

A person of ordinary skill in the art may be aware that, in combination with units and steps of the examples described in embodiments disclosed in this specification, this application can be implemented by electronic hardware or a combination of computer software and electronic hardware. Whether the functions are performed by hardware or software depends on particular applications and design constraints of the technical solutions. A skilled person may use different methods to implement the described functions for each particular application, but this implementation should not be considered as beyond the protection scope of this application.

In several embodiments provided in this application, it should be understood that the disclosed apparatuses and methods may be implemented in another manner. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be indirect couplings or communication connections through some interfaces, apparatuses or units, and may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement the embodiments, all or some of the embodiments may be implemented in a form of computer program product. The computer program product includes one or more computer instructions. When the computer program instructions are loaded and executed on a computer, all or some procedures or functions in embodiments of this application are generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the foregoing storage medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

The following describes technical solutions of embodiments in this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5^{th} generation (5^{th} generation, 5G) system or new radio (new radio, NR) and a future communication system, and vehicle-to-X (vehicle-to-X V2X), where V2X may include vehicle-to-network (vehicle-to-network, V2N), vehicle to vehicle (vehicle-to-vehicle, V2V), vehicle-to-infrastructure (vehicle-to-infrastructure, V2I), vehicle-to-pedestrian (vehicle-to-pedestrian, V2P), and the like, long term evolution-vehicle (long term evolution-vehicle, LTE-V), internet of vehicles, machine-type communication (machine-type communication, MTC), internet of things (internet of things, IoT), long term evolution-machine (long term evolution-machine, LTE-M), machine to machine (machine to machine, M2M), and the like.

FIG. 13 is a diagram of a network architecture according to an embodiment of this application. As shown in FIG. 13, a communication system in embodiments of this application may include a network device and a plurality of terminal devices. The network device may include one or more antennas. In addition, the network device may additionally include a transmitter chain and a receiver chain. A person of ordinary skill in the art may understand that the transmitter chain and the receiver chain each may include a plurality of components (such as a processor, a modulator, a multiplexer, a demodulator, a demultiplexer, or an antenna) related to signal sending and receiving.

The network device may communicate with the plurality of terminal devices. The terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device having a wireless connection function. Currently, some examples of the terminal device are a mobile phone (mobile phone), a tablet computer, a laptop computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile network (public land mobile network, PLMN), and/or any other suitable device configured to perform communication in a wireless communication system. This is not limited in embodiments of this application.

The wearable device may also be referred to as a wearable smart device, which is a generic term for wearable devices that are developed through intelligent design on daily wearables by using wearable technologies, such as glasses, gloves, watches, clothing, and shoes. In addition, the terminal device in embodiments of this application may alternatively be a terminal device in an internet of things system. IoT is an important part of future development of information technologies. A main technical feature of the IoT is connecting a thing to a network by using a communication technology, to implement an intelligent network for interconnection between a person and a machine or between things.

In addition, in embodiments of this application, the terminal device may further include a sensor, for example, a smart printer, a train detector, or a gas station. Main functions of the terminal device include collecting data (for some terminal devices), receiving control information and downlink data from the network device, sending an electromagnetic wave, and transmitting uplink data to the network device.

The network device in embodiments of this application may be a device configured to communicate with the terminal device. The network device may be a base station (base transceiver station, BTS) in a global system for mobile communications (global system for mobile communications, GSM) or code division multiple access (code division multiple access, CDMA), or may be a NodeB (NodeB, NB) in a wideband code division multiple access (wideband code division multiple access, WCDMA) system, or may be an evolved NodeB (evolved NodeB, eNB or eNodeB) in an LTE system, or may be a radio controller in a cloud radio access network (cloud radio access network, CRAN) scenario, or may be a radio network controller (radio network controller, RNC), a base station controller (base station controller, BSC), a home base station (for example, a home evolved NodeB, or a home NodeB, HNB), or a baseband unit (baseband unit, BBU). Alternatively, the network device may be a relay station, an access point, a vehicle-mounted device, a wearable device, a network device in a 5G network, a network device in a future evolved PLMN network, or the like, or may be an access point (access point, AP), a wireless relay node, a wireless backhaul node, a transmission point (transmission point, TP), a transmission and reception point (transmission and reception point, TRP), or the like in a WLAN, or may be a gNB or a transmission point (TRP or TP) in a new radio (new radio, NR) system, or one antenna panel or a group of (including a plurality of antenna panels) antenna panels of a base station in a 5G system, or may be a network node that forms a gNB or a transmission point, for example, a baseband unit (BBU) or a distributed unit (distributed unit, DU). This is not limited in embodiments of this application.

In some deployments, the gNB may include a central unit (central unit, CU) and a DU. The gNB may further include an active antenna unit (active antenna unit, AAU for short). The CU implements some functions of the gNB, and the DU implements some other functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of the following nodes: a CU node, a DU node, and an AAU node. In addition, the CU may be classified into a network device in an access network (radio access network, RAN), or the CU may be classified into a network device in a core network (core network, CN). This is not limited in this application. For procedure and method application in a ranging process, a technical solution is shown in FIG. 3 (a one-to-one ranging procedure is used as an example).

It should be noted that, in FIG. 3, a ranging beacon is used for time synchronization of a UWB personal area network and parameter broadcasting of the network. An RCAP is a contention period in which a device may actually access the network (access the personal area network). An RCFP is a contention-free period in which slot allocation required for necessary inter-device interaction may be performed. An RCM is a ranging control frame, and is responsible for managing a time period, that is, a ranging period.

### It is assumed that roles of devices are as follows:

In the figure, two devices are used as an example. In a beacon phase, a device 1 is defined as a coordinator, and is responsible for sending a beacon frame, to implement parameter broadcasting and time synchronization in a personal area network. After receiving the beacon frame, a device 2 accesses the personal area network of the device 1 (the coordinator) as required.

In a contention and contention-free phase, the device 1 (the coordinator) may indicate, by using the beacon, whether this phase (the contention and contention-free phase) is required. If this phase is required, another device (for example, a device n) may intervene, in this phase, in the personal area network established by the device 1. If this phase is not required, the current personal area network and related devices in the personal area network are maintained.

In the ranging process, there are four role definitions in total. The device 1 serves as both a controller (controller) and a ranging initiator (initiator), and the device 2 serves as both a controlee (controlee) and a ranging responder (responder). The device 1 implements ranging with the device 2. The controller (controller) is responsible for sending the ranging control frame, including the role definitions and slot allocation control, to be specific, devices to be ranging initiators (initiators) and devices to be ranging responders (responders). In the ranging process, time slices of all time periods are allocated by using the ranging control frame based on TDMA.

As shown in FIG. 3, implementation steps of a UWB ranging procedure in a diagram of a structure of a technical solution are as follows:
Step 1: Before UWB is started, wake up the UWB by using BLE; and after the UWB is woken up, the UWB uses a default parameter (for example, a channel number, a synchronization code (preamble code), or a rate that is defined during initialization).
Step 2: After the UWB is woken up and started, perform networking and ranging.
Step 3: Send a beacon frame in the beacon (Beacon) phase, to implement personal area network definition, time synchronization, and the like.
Step 4: Complete accessing of a device to the network and interaction between specified devices in the contention and contention-free phase.
Step 5: In the ranging process, send the ranging control frame (RCM) first, perform time allocation based on TDMA, define a role, and in addition, for generation of a secure STS sequence, send an RSKD (ranging STS key data) information element (Information element, IE) in advance. A specific definition of RSKD in a standard is shown in Table 4:

**Table 4**

| Bits: 0 | 1 | 2 | 3 | 4 | 5 to 6 | 7 | Octets: 0/4 | 0/4 | 0/4 | 0/4 | 0/16 | 0/4/8/16 |
|---|---|---|---|---|---|---|---|---|---|---|---|---|
| V3P | V2P | V1P | VCP | SKP | ACP | CP | V3 | V2 | V1 | V counter | STS key | Application code |

As shown in FIG. 4 (a quantity represented by n may be configured based on different modes), key parameters, to be specific, V1/V2/V3/V counter and the STS key, form input for generating different STS segments.

Step 6: The initiator initiates an initial ranging frame, and the responder feeds back the ranging frame to the initiator after receiving the initial ranging frame. A specific classification of forms of the UWB ranging frame is shown in FIG. 5.

From the flowchart of STS sequence generation in FIG. 4 and a format of a UWB ranging frame in FIG. 5, a specific form of the STS is shown in FIG. 4. For example, a gap in the STS sequence in FIG. 4 is defined as 512 0s. As shown in FIG. 4, FIG. 4 is described by using an example in which the STS includes four STS segments.

Step 7: Each device calculates time of flight of the ranging frame, to complete inter-device ranging.

Step 8: Complete broadcasting of a ranging result by using the UWB, which is irrelevant to the BLE.

Then, a new round of ranging is repeatedly performed according to the foregoing steps, and details are not described herein again.

The foregoing conventional technical solution has the following disadvantages:
(1) A UWB ultra-broadband system needs to complete establishment of the personal area network, and complexity is high.
(2) STS sequence generation requires the UWB system to complete parameter negotiation This occupies long working time of the broadband system, power consumption is high, parameter configuration is limited, and flexibility is poor.
(3) Usually, in the personal area network of the UWB system, a maximum of seven devices are supported, and a size of the personal area network is limited.

In view of this, for the technical solutions and technical problems listed above, this application provides a secure ranging solution integrating broadband and narrowband. A personal area network is established through a narrowband system, and a security parameter is negotiated at the same time, to reduce system power consumption. Formulation of a secure ranging frame can be configured as required, which has strong flexibility.

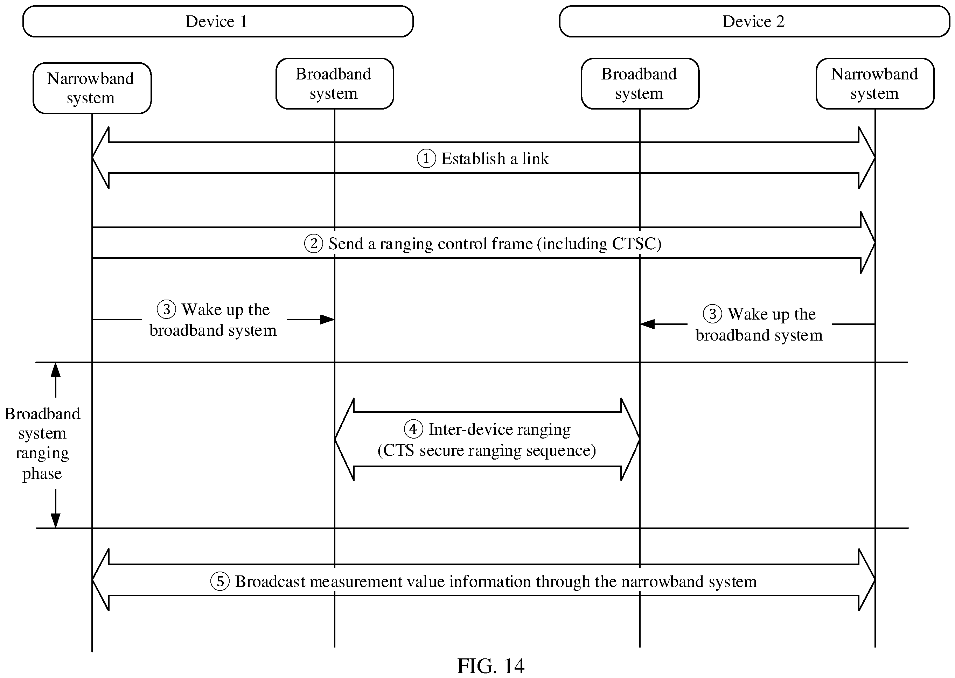

FIG. 14 is a schematic flowchart of a method for secure ranging integrating broadband and narrowband according to this application. The method includes the following steps.

Step 1: Establish an inter-device communication link (and obtain a session key (session key) at the same time) through a narrowband system, to form a personal area network, which does not require intervention of a broadband system.

Step 2: The narrowband system sends a ranging control frame that includes a secure ranging generation sequence information CTSC IE information element. Detailed field composition of the CTSC IE information element is shown in Table 5.

**Table 5**

| Bits: 0 to 1 | 2 to 6 | 7 to 9 | 10 to 12 | 13 to 14 | 15 to 16 |
|---|---|---|---|---|---|
| Cts config | Cts code index | Cts symbol number | Cts segment symbol number | Gap base symbol number | Reserved |

Specific meanings of the fields are shown in Table 6.

**Table 6**

| Parameter | Description | Value |
|---|---|---|
| ctsConfig | Whether a ranging frame includes a CTS part | 0: The ranging frame does not include the CTS part |
| | | 1: The ranging frame includes the CTS part |
| ctsCodeIdx | Index of a preamble code in a CTS segment | 1 to 32 |
| ctsSymNum | Quantity of preamble codes in a CTS | 16, 32, 64, 128, 256, 512, 1024 |
| | | Unit: symbol |
| ctsSegSymNum | Quantity of preamble codes in the CTS segment | 16, 32 |
| gapBaseSymNum | Base length of a gap (Gap) between CTS segments | 256, 512, 1024 |
| | | Unit: symbol |

Step 3: Wake up the broadband system to prepare for ranging.

Step 4: The broadband system generates the CTS, to complete inter-device ranging.

Step 5: The broadband system reports a measurement result to the narrowband system, to broadcast the measurement result to another device through the narrowband system.

The following describes in detail two possible manners in which the broadband system generates the CTS.

### Manner 1

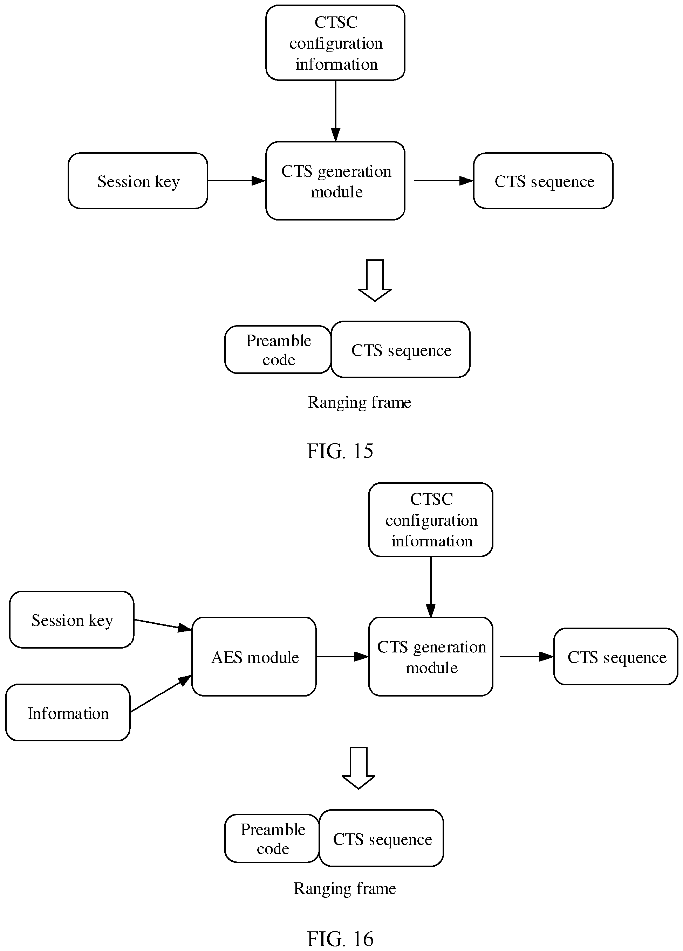

As shown in the flowchart of secure ranging integrating the broadband and narrowband systems in FIG. 14, after the narrowband system establishes the link, the session key (session key) is synchronously generated. In this method, for generation of the CTS sequence, a method shown in an input/output procedure of CTS sequence generation in FIG. 15 may be used, and the session key may be 128 bits or 256 bits. After the CTS sequence is generated, the preamble code and the CTS sequence are spliced, to be assembled into the ranging frame. The ranging frame is sent and received, to complete inter-device ranging of the broadband system.

### Manner 2

FIG. 16 is a diagram of an input/output procedure of CTS sequence generation in Manner 2. Steps of generating a CTS sequence include:
(1) A broadband system uses a narrowband system to establish a session key (session key).
(2) Obtain information (Message). A splicing manner of the message may be that of information obtained based on detailed descriptions of CTSC information in Table 2.
   For example, an assembly manner may be ctsConfig|ctsCodeIdx|ctsSymNum|gapBaseSymNum|0..., to form 128 bits or 256 bits. If the message is not long enough, the message is padded with 0.
(3) Use a session key and the message as input of an AES module, use a generated pseudorandom bit (bit) as input of a CTS generation module, and splice a generated CTS sequence and a preamble code to form a ranging frame of the broadband system.

In the foregoing technical solutions, the link is established through the narrowband system, the narrowband system obtains the session key, and the secure CTS sequence is further generated based on the session key. Devices of both parties generate the CTS sequences in a symmetric manner. The related parameter for generating the CTS sequence is defined in detail. A sequence length and the sequence gap can be configured as required based on the CTSC message, to enhance flexibility. In addition, the narrowband system replaces the broadband system to perform key-related information negotiation, so that broadband power consumption can be reduced, secure ranging performance can be improved, and low-power-consumption and high-accuracy ranging is implemented.

The foregoing describes in detail the method for secure ranging integrating broadband and narrowband provided in this application. The following describes the communication apparatuses provided in this application.

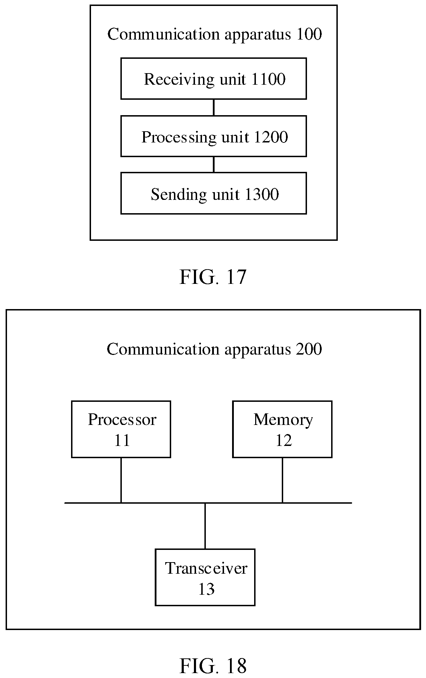

FIG. 17 is a block diagram of a communication apparatus 100 according to this application. As shown in FIG. 17, the communication apparatus 100 includes a receiving unit 1100, a processing unit 1200, and a sending unit 1300. Modules in the communication apparatus are configured to perform corresponding steps in the methods in the method embodiments of this application.

A function of a processing apparatus may be implemented by hardware, or may be implemented by hardware executing corresponding software. For example, the processing apparatus may include a memory and a processor. The memory is configured to store a computer program. The processor reads and executes the computer program stored in the memory, so that the communication apparatus 100 performs operations and/or processing performed by a terminal device in the method embodiments. Optionally, the processing apparatus may include only the processor, and the memory configured to store the computer program is located outside the processing apparatus. The processor is connected to the memory through a circuit/wire, to read and execute the computer program stored in the memory. For another example, the processing apparatus may be a chip or an integrated circuit.

Optionally, in an implementation in which the communication apparatus 100 may be a chip or an integrated circuit installed in a terminal device, the sending unit 1300 and the receiving unit 1100 may be a communication interface or an interface circuit. For example, the sending unit 1300 is an output interface or an output circuit, and the receiving unit 1100 is an input interface or an input circuit. The processing unit 1200 may be a processor or a microprocessor integrated on the chip or the integrated circuit. This is not limited herein

FIG. 18 is a diagram of a structure of a communication apparatus 200 according to this application. The apparatus 200 includes a processor 11. The processor 11 is coupled to a memory 12. The memory 12 is configured to store a computer program or instructions and/or data. The processor 11 is configured to: execute the computer program or the instructions stored in the memory 12, or read the data stored in the memory 12, to perform the methods in the foregoing method embodiments.

Optionally, there are one or more processors 11.

Optionally, there are one or more memories 12.

Optionally, the memory 12 is integrated with the processor 11, or separately disposed.

Optionally, as shown in FIG. 18, the apparatus 200 further includes a transceiver 13. The transceiver 13 is configured to receive and/or send a signal. For example, the processor 11 is configured to control the transceiver 13 to receive and/or send the signal.

In addition, this application further provides a computer-readable storage medium. The computer-readable storage medium stores computer instructions. When the computer instructions are run on a computer, the methods in the method embodiments of this application are performed.

This application further provides a computer program product. The computer program product includes computer program code or instructions. When the computer program code or the instructions are run on a computer, the methods in the method embodiments of this application are performed.

In addition, this application further provides a chip, and the chip includes a processor. A memory configured to store a computer program is disposed independent of the chip. The processor is configured to execute the computer program stored in the memory, so that the methods in the method embodiments of this application are performed.

Further, the chip may include a communication interface. The communication interface may be an input/output interface, an interface circuit, or the like. Further, the chip may include the memory.

In addition, this application further provides a communication system, including a terminal device in embodiments of this application.

It should be understood that the processor in embodiments of this application may be an integrated circuit chip, and has a signal processing capability. In an implementation process, the steps in the foregoing method embodiments may be implemented by using a hardware integrated logic circuit in the processor, or by using instructions in a form of software. The processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by using a combination of hardware and a software module in an encoding processor. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing methods in combination with hardware of the processor.

The memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through examples but not limitative descriptions, RAMs in many forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification aims to include but is not limited to these memories and any memory of another proper type.

A person of ordinary skill in the art may be aware that, in combination with units and algorithm steps of the examples described in embodiments disclosed in this specification, this application can be implemented by electronic hardware or a combination of computer software and electronic hardware. Whether the functions are performed by hardware or software depends on particular applications and design constraints of the technical solutions. A skilled person may use different methods to implement the described functions for each particular application, but this implementation should not be considered as beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and methods may be implemented in another manner. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be indirect couplings or communication connections through some interfaces, apparatuses or units, and may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions in this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A secure ranging method, comprising:
obtaining, by a first terminal device, a session key by negotiating with a second terminal device in a first communication system;
sending, by the first terminal device, first configuration information to the second terminal device in the first communication system, wherein the first configuration information comprises a related parameter for generating a channel impulse response training sequence CTS;
generating, by the first terminal device, the CTS based on the first configuration information and the session key; and
determining, by the first terminal device, a first measurement result in a second communication system based on the CTS, wherein the first measurement result comprises distance information between the first terminal device and the second terminal device, and a bandwidth used in the second communication system is greater than a bandwidth used in the first communication system.

2. The method according to claim 1, wherein the generating, by the first terminal device, the CTS based on the first configuration information and the session key comprises:
encrypting, by the first terminal device, the first configuration information and the session key by using an advanced encryption standard AES, and then generating the CTS.

3. The method according to claim 1 or 2, wherein the determining, by the first terminal device a first measurement result in a second communication system based on the CTS comprises:
generating, by the first terminal device, a ranging frame based on the CTS;
sending, by the first terminal device, the ranging frame to the second terminal device in the second communication system;
receiving, by the first terminal device, the ranging frame from the second terminal device in the second communication system; and
determining, by the first terminal device, the first measurement result based on time of flight of the ranging frame.

4. The method according to any one of claims 1 to 3, wherein the method further comprises:
sending, by the first terminal device, the first measurement result to the second terminal device in the first communication system.

5. The method according to any one of claims 1 to 4, wherein the first configuration information comprises at least one of the following parameters:
a code length of a preamble code used by the CTS, an index of the preamble code used by the CTS, a length of a cyclic prefix CP of the CTS, a quantity of segments comprised in the CTS, a quantity of preamble code symbols in each segment of the CTS, and a quantity of base symbols in a gap between adjacent segments in the CTS.

6. The method according to any one of claims 1 to 5, wherein a length of the session key is 128 bits or 256 bits.

7. A secure ranging method, comprising:
obtaining, by a second terminal device, a session key by negotiating with a first terminal device in a first communication system;
receiving, by the second terminal device, first configuration information from the first terminal device in the first communication system, wherein the first configuration information comprises a related parameter for generating a channel impulse response training sequence CTS; and
generating, by the second terminal device, the CTS based on the first configuration information and the session key, wherein the CTS is used to determine a first measurement result in a second communication system, the first measurement result comprises distance information between the first terminal device and the second terminal device, and a bandwidth used in the second communication system is greater than a bandwidth used in the first communication system.

8. The method according to claim 7, wherein the generating, by the second terminal device, the CTS based on the first configuration information and the session key comprises:
performing, by the second terminal device, encryption based on the first configuration information and the session key by using an advanced encryption standard AES, and then generating the CTS.

9. The method according to claim 7 or 8, wherein the method further comprises:
receiving, by the second terminal device, the ranging frame from the first terminal device in the second communication system;
determining, by the second terminal device, that the ranging frame comprises the CTS; and
sending, by the second terminal device, the ranging frame to the first terminal device in the second communication system.

10. The method according to any one of claims 7 to 9, wherein the method further comprises:
receiving, by the second terminal device, the first measurement result from the first terminal device in the first communication system.

11. The method according to any one of claims 7 to 10, wherein the first configuration information comprises at least one of the following parameters:
a code length of a preamble code used by the CTS, an index of the preamble code used by the CTS, a length of a cyclic prefix CP of the CTS, a quantity of segments comprised in the CTS, a quantity of preamble code symbols in each segment of the CTS, and a quantity of base symbols in a gap between two adjacent segments in the CTS.

12. The method according to any one of claims 7 to 11, wherein a length of the session key is 128 bits or 256 bits.

13. A communication apparatus, comprising a module configured to perform the method according to any one of claims 1 to 6.

14. A communication apparatus, comprising a module configured to perform the method according to any one of claims 7 to 12.

15. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 6.

16. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 7 to 12.

17. A computer-readable storage medium, wherein the computer-readable storage medium stores computer instructions; and when the computer instructions are run on a computer, the method according to any one of claims 1 to 6 is performed.

18. A computer-readable storage medium, wherein the computer-readable storage medium stores computer instructions; and when the computer instructions are run on a computer, the method according to any one of claims 7 to 12 is performed.
